# EUROPEAN PATENT SPECIFICATION

(11) **EP 3 443 553 B1**
(45) Date of publication and mention of the grant of the patent: **20.07.2022**
(21) Application number: 17718339.9
(22) Date of filing: 14.04.2017
(51) Int. Cl.: G09B 21/04, G06F 3/01

(54) **CONVERSION SYSTEM OF THE MOVEMENTS RELATED TO SIGN LANGUAGES INTO VOICE AND/OR WRITTEN TEXT**
SYSTEM ZUR UMWANDLUNG VON BEWEGUNGEN IM ZUSAMMENHANG MIT ZEICHENSPRACHEN IN SPRACH- UND/ODER GESCHRIEBENEN TEXT
SYSTÈME DE CONVERSION DES MOUVEMENTS SE RAPPORTANT À LA LANGUE DES SIGNES EN TEXTE ÉCRIT ET/OU EN VOIX

(30) Priority: 15.04.2016 IT UA20163165
(43) Date of publication of application: 20.02.2019
(73) Proprietor: Limix S.r.l., 62032 Camerino (MC) (IT)
(72) Inventor: PEZZUOLI, Francesco, 63085 Maltignano (AP) (IT)
(74) Representative: Primiceri, Maria Vittoria
(86) International application number: PCT/EP2017/025091
(87) International publication number: WO 2017/178121

(56) References cited:
- CN-A- 102 357 899
- ES-A1- 2 532 132
- US-B1- 6 515 669
- ALISTAIR RIDDELL: "HyperSense Complex: An Interactive Ensemble", PROCEEDINGS OF THE AUSTRALASIAN COMPUTER MUSIC CONFERENCE, 14 December 2005 (2005-12-14), XP055339627, ISSN: 1448-7780

## Description

### Field of the invention

The area of this invention is the Human-Computer Interaction (HCI), that is the research branch aiming to find innovative solutions for the interaction between men and machines, these latter being the technological devices that we daily use, or that we will use in the future.

The improvement of this interaction can be of interest to both normal and disabled people, for which innovative technological solutions can lead to an essential improvement of their life style.

The field of the present invention is that relating to the use of the upper limbs, or parts thereof, to codify some specific movements and to translate them as inputs for any kind of technological devices.

Among all the possible applications, home automation and the translation of said movements into written text using special software play a very important role.

Considering that the technology that allows a text be transformed into speech is already well known, the main goal of this invention is to allow deaf-mute people to speak in real-time thanks to an artificial voice.

Other applications for people with serious diseases can regard both interaction with other devices used for walking, such as electric wheelchairs or exoskeletons and similar equipment, and constant monitoring of vital parameters of disable people thanks to dedicated sensors.

Further fields of application of this invention are the remote control for multimedia devices, robot, drones or the interaction with augmented reality software.

### Background

The technologies developed over the last decades allowed the use of the hand movements, of each finger and sometimes of the entire arm to interact with different kind of devices.

Various patents dealt with applications addressing the field of the communication of deaf-mute people through the sign language. Said language cannot be easily understood by people that are not in touch with this disability: as a consequence, the translation of the codified signs into text and speech is fundamental for it to become a universal language.

Even if there are different sign languages in the world, the technological approach for their translation can be the same.

Once a system that correctly codifies a set of signs of fifty gestures in real time is developed, the problems to be solved so that it may also work for other applications, such as home automation, are certainly of simpler approach. Almost all existing patents use wearable gloves as communication devices, such as, for example, the international patent WO2004114107, where the sensors and computational components are gathered between the wrist and the finger tips.

The same approach is used in the patent ES2386992.

To increase the number of gestures that can be translated, it is necessary to have information from more parts rather than one hand. In accordance with this principle, the device disclosed in the patent US2010023314 has: accelerometers with 3 axes on the single fingers and on the back of the hand; other sensors to track the rotation of the forearm, the push-up of the elbow, torsion and rotation of the arm.

In the state of the art the patent ES2532132 A1 is also known, that describes a portable system that interacts with a remote system to exchange information about gestures and tactile perceptions.

CN 102357899 A only detects the entire flexion of the finger and uses only five resistive sensors, this means that it is impossible to obtain a precise reconstruction of the fingers movements since the finger is considered a single rigid body attached to a single joint that rotates in the direction of the flexion of the finger.

Alistair Riddell, Proceedings of the Australasian Computer Music Conference, 14 Dec. 2005 (2005-12-14), goes in the same direction of CN 102357899 A. In addition the device therein disclosed will never be able to recognize the movements between the proximal phalanxes and the metacarpal since the sensors are in no way anchored to the back of the hand, so that when the fingers are flexed the part of the sensors leaning but not fixed to the back of the hand will rise without detecting any bending changes.

US 6515669 B1 teaches to use Euler's angles to detect the orientation of an object in space that is able to move in all its degrees of freedom. However Euler's angles are not suitable for detecting orientations of objects that are free to move in space in any way, because Euler's angles suffer from a phenomenon called "gimbal lock". Therefore in US 6515669 B1, very complex components are used that get inaccurate detections of hand and finger components, for example do not track the complete movement of the fingers so they suffer from the same criticalities as CN 102357899 A and Alistair but for different technical reasons.

The use of gloves leads to a wide range of problems to be solved. First, it causes a difficult arrangement of the electronic circuit that has to be stable also during the different joint movements of the hand.

Moreover, the gloves deprive the finger tips and the palm of the tactile functions. They also may lead to a limited transpiration, with problems of sweating in case of use for a long time.

### Disclosure of the invention

The aim of this invention is to develop an innovative dressing system of sensors to overcome these problems.

A wide set of variables must be analyzed, regarding both the hardware physical constraints such as number and position of the sensors, obstruction and disposition of the cables, and the functionality of the device such as wearability, comfort and transpiration.

Since this invention extends the functionality of the system also to the forearm, another important problem is the perfect well-fitting of the device, irrespective of the size of the limb, that changes for every user.

This problem can be only partially solved with assorted sizes or adjustable devices.

The best solution is given by a custom-made device taking into account the specific shape of the limb by a 3D scan of the same.

The present invention is defined in claim 1.

This system allows for a better stability than that of the classic gloves, hence a greater reliability of data acquired from the flex sensors. The finger tips and the palm of the hand are not covered.

Indeed, a second part of the system is placed on the back of the hand, it is made of stiff material and it is designed to hide, protect and correctly lead the connection cables and to host one IMU (Inertial Measurement Unit). The IMU is used to acquire the movement data of the entire hand in the 3 dimensional space.

The third rigid part of the system is positioned on the forearm and it is connected with the previous one by protective, but flexible, materials.

This part is designed to host different components such as a microcontroller, another IMU, a bluetooth module, a battery, a control light, etc..

The IMUs can have 3 to 11 degrees of freedom and any number or type of them can be inserted, according to the design and the task of the device.

Therefore, the whole system is composed of rigid and non-deformable parts that are essential to anchor and protect the different components and sensors. Indeed, possible damage can be caused by the movements of the hand and the forearm. Moreover, the rigid parts limit the interference with the sensors. The other parts are flexible and allow the hand and forearm not to be limited in degrees of movement.

The rigid parts can be designed with the highest precision through 3D CAD systems.

This quality allows an easy parametric approach to the design, in order to obtain different sizes of the various parts in a fast way. Moreover, if the CAD models are obtained from a 3D scan of the limb, the components can be customized.

### Brief description of drawings

Fig. 1 represents a view of the forearm and hand rotated on the back side, where it is possible to see the various components of the system.
Fig. 2 is a view of the forearm and hand rotated on the palm side, where the anchoring systems of the various components to the limb are visible, showing that the tactile sense of the final user will not be affected.
Fig. 3 is a view of various flex sensors, IMU, sensors for monitoring vital parameters or of support to devices for disabled people, microcontroller for management of input and output signal by using Bluetooth module.
Fig. 4 is a detailed view of a fairlead element which is a part of the system.

### Detailed description of the invention

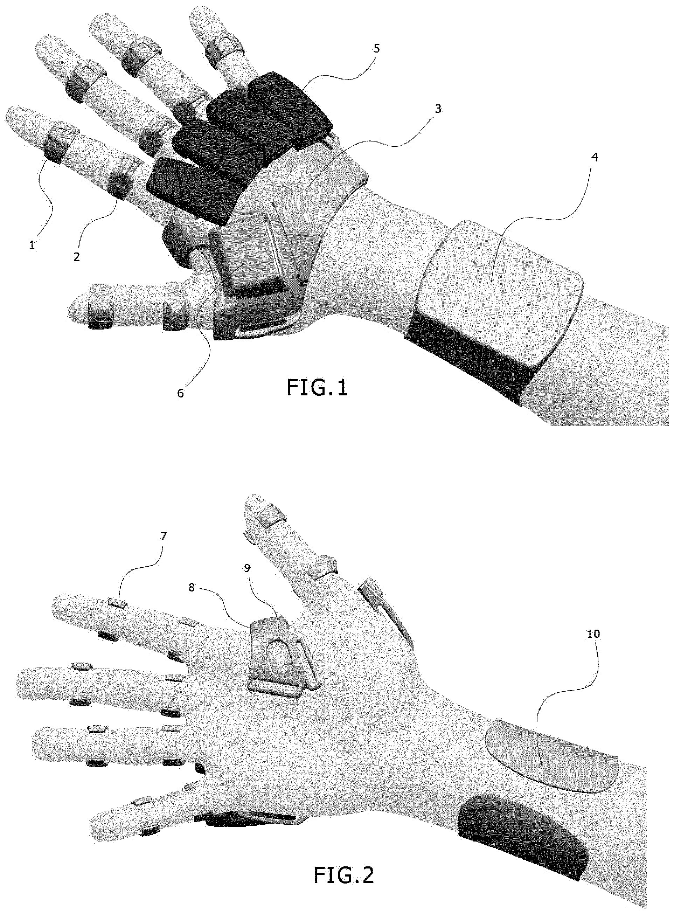

Referring to Fig.1, the system provides a set of open rings (1, 2) made of rigid and non-deformable material to be worn and placed on the joints of the fingers of one hand or both, the shape of which leaves uncovered the tactile areas of the hand, and on which spaces for housing different flex sensors (11) (not shown in Fig. 1) are obtained. An arrangement of this type ensures a better operation and greater reliability of the data derived from the flex sensors, through which the position of the hand is then reconstructed. A part (3), also rigid and non-deformable, is placed on the back of the hand and anchored to the same through a C-shape form (8) placed in an area between thumb and forefinger. Through the part (3) it is obtained the routing of many connection cables which are passed through appropriate fairlead elements (5) in order to prevent any possible malfunction or obstruction of the sensors. Said shaped fairlead elements (5) are insertable by sliding in coupling elements placed on the part (3).

In embodiments not covered by the claimed invention, there is the possibility to use a type of flex sensors (11) extending from the tip of the fingers up to the back of the hand without the presence of the open rings (1, 2) and the fairlead elements (5). On the part (3) a specific housing (6) is also obtained for a IMU (12), able to ensure proper anchoring and protection. A part (4) is positioned on the forearm to accommodate motion sensors for this specific anatomical part, and it is designed to accommodate many other elements, such as microprocessor, another IMU, Bluetooth communication module and battery. Also this part (4) is made of rigid and non-deformable material as well as the part (3) positioned on the back of the hand and the rings (1, 2). All the connections between the parts (3, 4) are made of flexible material so that it does not adversely affect any kind of movement of the limb.

Referring to Fig. 2, it can be seen how all parts that make up the system are characterized by particular anatomical shapes that provide an easy wearability limiting the occupied areas on the lower face of the limb to the minimum. Coupling forms (7) of the rings (1, 2) to the fingers are designed in such a way to keep the front face of the phalanges free.

The C-shaped coupling form (8) to the palm of the hand instead occupies a very limited area of the palm in a terminal zone comprised between thumb and forefinger. In this area there is also a space (9) for the insertion of a multifunction button.

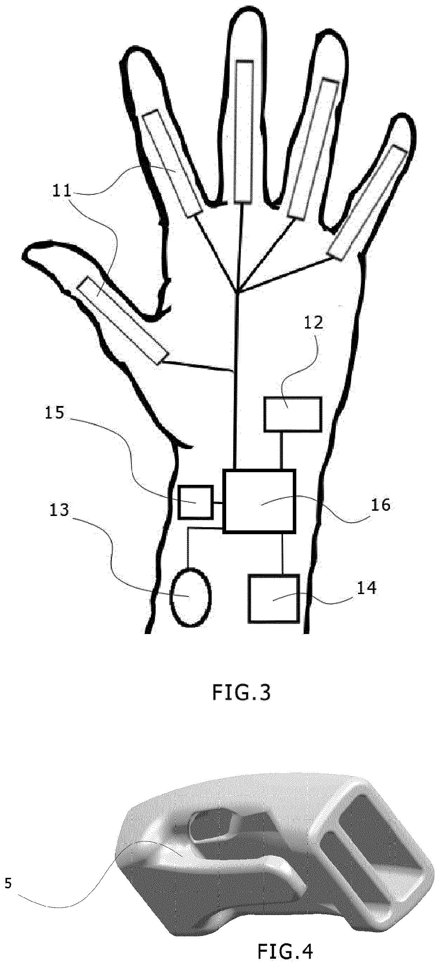

There is also a coupling form (10) to the forearm of the user, that is open bracelet-shaped and is designed to allow an easy wearability of the part (4), but also a good stability of the same during operation and movement phases. Figure 3 represents the flex sensors (11) which are essential to keep track of the movements sent from each one of the five fingers. The IMU (12) allows to acquire the motion data of the entire hand in the three-dimensional space. All sensors are in connection with a microcontroller (16), which handles both input signals and output data to be sent through a Bluetooth module (15) to the device containing the main software. In connection with the microcontroller (16) there may be sensors for Health Care (13) to monitor clinical situation of the user, such as: heart rate, blood glucose sensors etc., and an electromyographic (14) sensor that detects muscle activity too. Using more sensors, it is possible to have more accurate data about the movement of the hand and fingers. The device of the present invention, in addition to allowing the voice communication through the interpretation of the sign language, can be used for many other purposes. For example, it can be used to control home automation devices through radio communication according to 868Mhz KNX standard, or for remote control of multimedia players, robots or drones. This system can also be used as a PC input device for interacting with virtual reality or augmented reality. The device can also have other purposes in the field of health care, such as the control of other devices for disabled people, e.g. a wheelchair.

## Claims

1. Conversion system of the movements related to sign languages of one hand or both, as well as their respective forearms, into voice and / or written text comprising :
- a set of open rings (1, 2) to be worn and placed on fingers joints of one hand or both with coupling forms (7) such that they leave the tactile parts of the hands free and used for housing flex sensors (11);
- a part (3) to be placed on the back of the hand and anchored to the same through a C-shape form (8) placed in an area covering the palm of the hand in a terminal zone comprised between thumb and forefinger.
- a space (9) which is located in the area between thumb and forefinger and which is suitable for housing a multifunction button;
- a housing area (6) created in the part (3), suitable for anchoring and protecting a IMU (12), wherein IMU means Inertial Measurement Unit ;
- shaped fairlead elements (5) that are insertable by sliding in coupling elements placed on the part (3);
- a part (4) to be worn through an open bracelet (10) on one forearm or both, in which a further IMU, a microcontroller (16) in connection with all sensors and a Bluetooth module (15) are housed;
- links between the parts (3, 4).

2. Conversion system, according to claim 1, wherein the flex
sensors (11) are constituted by flexible strips positioned along the entire back of the fingers.

## Patentansprüche

1. System zum Umwandeln der auf Gebärdensprachen bezogenen Bewegungen einer Hand oder beider sowie ihrer jeweiligen Unterarme in einen stimmlichen und/oder geschriebenen Text, umfassend
- eine Reihe von offenen Ringen (1, 2), die getragen und auf die Gelenke der Finger einer oder beider Hände mit Kupplungsformen (7) derart aufgesetzt werden, dass diese die taktilen Teile der Hände freilassen und zum Halten von flexiblen Sensoren (11) verwendet werden;
- ein Teil (3), das auf dem Handrücken zu platzieren und an diesem mittels einer C-Form (8) zu befestigen ist, die in einem Bereich angeordnet ist, der die Handfläche in einem Endbereich zwischen Daumen und Zeigefinger bedeckt;
- einen im Bereich zwischen Daumen und Zeigefinger angeordneten Raum (9), der zur Unterbringung einer Multifunktionstaste geeignet ist;
- einen im Teil (3) geschaffenen Aufnahmebereich (6), der zum Befestigen und Schützen einer IMU (12) geeignet ist, wobei IMU Inertial Measurement Unit bedeutet;
- Elemente in Form von Kabelverschraubungen (5), die in am Teil (3) angeordnete Kupplungselemente einschiebbar sind;
- ein mittels eines offenen Armbands (10) zu tragendes Teil (4) an einem Unterarm oder beiden, in dem eine zusätzliche IMU, ein Mikrocontroller (16) in Verbindung mit allen Sensoren und ein Bluetooth-Modul (15) untergebracht sind;
- Verbindungen zwischen den Teilen (3, 4).

2. System zum Umwandeln nach Anspruch 1, wobei die flexiblen Sensoren (11) aus flexiblen Streifen bestehen, die entlang der gesamten Rückseite der Finger positioniert sind.

## Revendications

1. Système de conversion des mouvements liés aux langues des signes d'une main ou des deux, ainsi que de leurs avant-bras respectifs, en un texte vocal et/ou écrit, comprenant
- une série d'anneaux ouverts (1, 2) à porter et à poser sur les articulations des doigts d'une main ou des deux, avec des formes d'accouplement (7) telles que celles-ci laissent libres les parties tactiles des mains et servent à loger des capteurs flexibles (11);
- une partie (3) destinée à être placée sur le dos de la main et fixée à celle-ci au moyen d'une forme en C (8) disposée dans une zone recouvrant la paume de la main dans une zone terminale entre le pouce et l'index;
- un espace (9) aménagé dans la zone entre le pouce et l'index, qui est adapté pour loger un bouton multifonction;
- une zone de logement (6) créée dans la partie (3), adaptée à la fixation et à la protection d'une IMU (12), où IMU signifie Inertial Measurement Unit;
- des éléments en forme de presse-étoupes (5), pouvant être insérés par coulissement dans des éléments de couplage disposés sur la partie (3);
- une partie (4) à porter au moyen d'un bracelet (10) ouvert sur un avant-bras ou les deux, dans laquelle sont logés une IMU supplémentaire, un microcontrôleur (16) en liaison avec tous les capteurs et un module Bluetooth (15);
- liaisons entre les parties (3, 4).

2. Système de conversion selon la revendication 1, dans lequel les capteurs flexibles (11) sont constitués par des bandes flexibles, positionnées sur tout le dos des doigts.
